# EUROPÄISCHE PATENTSCHRIFT

(11) **EP 0 901 917 B1**
(45) Veröffentlichungstag und Bekanntmachung des Hinweises auf die Patenterteilung: **18.09.2002**
(21) Anmeldenummer: 98113633.6
(22) Anmeldetag: 22.07.1998
(51) Int. Cl.: B60G 9/02, F16F 1/38

(54) **Zentrallager für eine Hinterachse eines Kraftfahrzeuges**
Central bearing for a motor car's rear axle
Palier central pour essieu arrière d'un véhicule à moteur

(30) Priorität: 12.09.1997 DE 19740077
(43) Veröffentlichungstag der Anmeldung: 17.03.1999
(73) Patentinhaber: Dr.Ing.h.c. F. Porsche Aktiengesellschaft, 70435 Stuttgart (DE)
(72) Erfinder: Germano, Francesco, 74321 Bietigheim-Bissingen (DE)

(56) Entgegenhaltungen:
- AT-B- 291 791
- DE-C1- 4 419 221
- DE-C2- 4 033 569
- FR-A1- 2 668 426
- US-A- 5 472 226

## Beschreibung

Die Erfindung bezieht sich auf Zentrallager für eine Hinterachse eines Kraftfahrzeuges nach dem Oberbegriff des Anspruchs 1.

Aus der DE 44 19 221 C1 ist ein gattungsgemässe Zentrallager für eine Hinterachse eines Kraftfahrzeuges bekannt, das mit einem Achsrohr verbunden ist. Aus der DE 40 33 569 A1 ist ein Axial-Buchsenlager bekannt, das in einer Lagerhülse eingespannt auf einem Lagerachsträger angeordnete elastische Elemente umfaßt.

Aufgabe der Erfindung ist es, ein Zentrallager für eine Hinterachse eines Kraftfahrzeuges zu schaffen, das eine definierte elastische Bewegung der Achse in allen Richtungen zuläßt.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß durch die Ausbildung und Anordnung der das Zentrallager bildenden elastischen Elemente eine optimale kardanische Bewegung der Fahrzeugachse im Betrieb erzielt wird. Hierzu sind die elastischen Elemente zweigeteilt bzw. dreigeteilt ausgebildet und auf einem Lagerachsenträger zusammengepreßt gehalten.

Durch diese Ausbildung des Lagers ist eine gute Beweglichkeit bzw. Kardanik der Achse vorgegeben, ohne daß die Elastizität eingeschränkt wird. Auch können durch diese Anbindung und Verbindung der elastischen Elemente untereinander Einrisse durch extreme Verdrehungen vermieden werden.

Der Zusammenbau der elastischen Elemente kann in einfacher Weise vorgenommen werden, wobei das mittige elastische Element über eine außenliegende Lagerhülse auf dem Lagerachsenträger gehalten wird und anschließend die außenseitigen eleastischen Elemente mittels der Lagerscheiben gegen das mittige Lager gepreßt und in Lage gehalten werden.

Es sind zwei Ausführungen eines Zentrallagers vorgesehen, wobei die außenliegenden elastischen Elemente zum einen entweder an der Lagerhülse anvulkanisiert oder an der Lagerscheibe anvulkanisiert sind und das andere Ende sich dann entsprechend abstützen kann.

Die Lagerscheibe ist vorzugsweise am Lagerachsenträger für das erste elastische Element mit Preßsitz gehalten.

Ausführungsbeispiele der Erfindung sind in den Zeichnungen dargestellt und werden im folgenden näher beschrieben.
Es zeigen
- Fig. 1: eine erste Ausführung eines Zentrallagers im Schnitt mit einer angepreßten Abstützung an einer Lagerscheibe und
- Fig. 2: eine zweite Ausführung eines Zentrallagers im Schnitt mit einer angepreßten Abstützung an einer Lagerhülse.

Das Zentrallager 1; 2 ist in einer Aufnahmehülse 3 eines Bügels 4 mit einem Achsrohr 5 einer Hinterachse verbunden. Das Lager 1; 2 ist in der Längsmittenachse eines Fahrzeuges mit einer querverlaufenden Schwenkachse 6 versehen.

Das Zentrallager 1; 2 umfaßt einen Lagerachsenträger 7 mit zwei sich gegenüberstehenden Schrägflächen 8, 9, auf denen sich das erste elastische Element 10 abstützt. Umgriffen wird dieses Element 10 von einer Lagerhülse 11, die ein koaxial zur Schwenkachse 6 angeordnetes Hülsenteil 11b und ein anschließendes Hülsenteil 11 a mit parallel zu den Schrägflächen 8, 9 verlaufenden Schrägflächen 12, 12a aufweist.

Die weiteren elastischen Elemente 14, zu beiden Seiten des mittig angeordneten ersten elastischen Elements 10 sind Hülsenelemente, die beabstandet zur Bildung eines Freiraumes jeweils stirnseitig mit der Lagerhülse 11 und einer Lagerscheibe 16 verbunden sind. Diese ist mittels eines Preßsitzes mit dem Lagerachsenträger 7 verbunden.

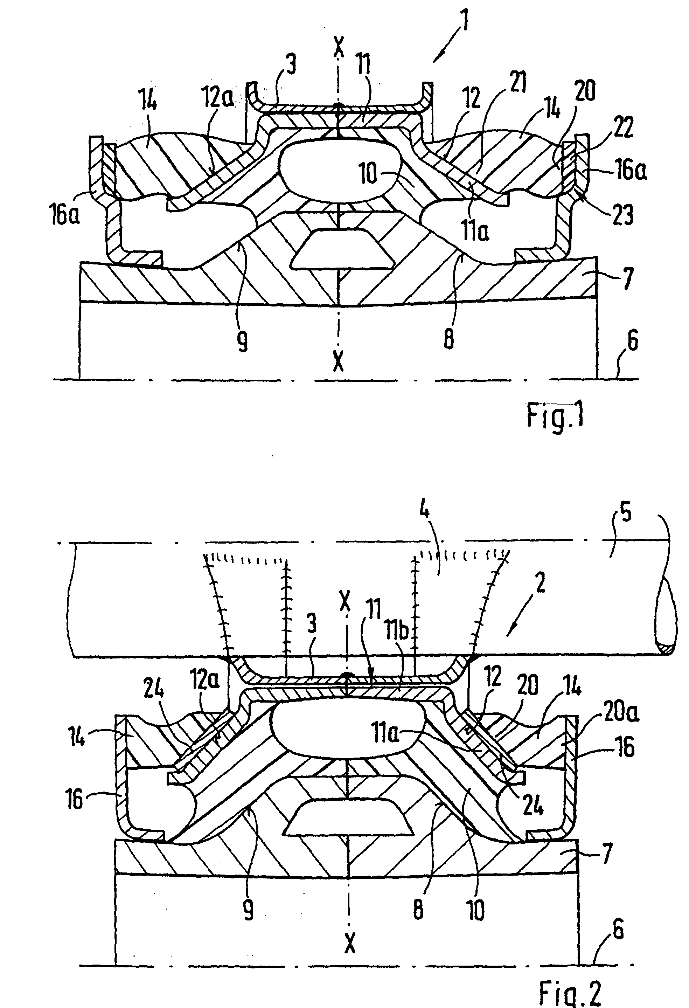

Nach einer ersten Ausführung gem. Fig. 1 sind die zweiten elastischen Elementen 14 mit ihren inneren Stirnflächen 20 an dem Hülsenteil 11a mit den Schrägflächen 12, beispielsweise durch Vulkanisieren verbunden. Die weiteren äußeren Stirnflächen 21 des zweiten elastischen Elements 14 sind mit einer Ringscheibe 22, z.B. aus Kunststoff, verbunden, die in einer Aufnahme 23 der Lagerscheibe 16a gehalten wird. Die Ringscheibe 22 kann in der Aufnahme 23 gegen eine Verdrehung festgesetzt sein.

Nach einer weiteren Ausführung gem. Fig. 2 sind die zweiten elastischen Elemente 14 mit ihren inneren Stirnflächen 20 an einer Ringscheibe 24 anvulkanisiert, die auf dem Hülsenteil 11a angepreßt aufliegt. Die äußeren Stirnflächen 20a der elastischen Elemente 14 sind dagegen an der Lagerscheibe 16 anvulkanisiert.

## Patentansprüche

1. Zentrallager für eine Hinterachse eines Kraftfahrzeuges das mit einem Achsrohr der Hinterachse verbunden ist, **dadurch gekennzeichnet, daß** auf einem Lagerachsenträger (7) ein erstes elastisches Elemente (10) angeordnet und in einer umgebenden Lagerhülse (11) eingespannt gehalten ist, auf der sich zu beiden Seiten einer Mittenebene (X-X) jeweils ein zweites aus einem Hülsenelement bestehendes elastisches Element (14) abstützt, welches über stirnseitige Lagerscheiben (16; 16a) am Lagerachsenträger (7) gehalten wird.

2. Zentrallager nach Anspruch 1, **dadurch gekennzeichnet, daß** zwischen Schrägflächen (8, 9) des Lagerachsenträgers (7) und der umgebenden Lagerhülse (11) das erste elastische Element (10) angeordnet ist und an Schrägflächen (12; 12a) die zweiten elastischen Elemente (14) abgestützt werden, welche zum Lagerachsenträger (7) beabstandet und freiliegend mit der Lagerscheibe (16) verbunden sind.

3. Zentrallager nach den Ansprüchen 1 oder 2, **dadurch gekennzeichnet, daß** die Lagerscheibe (16) über einen Preßsitz mit dem Lagerachsenträger (7) verbunden ist.

4. Zentrallager nach den Ansprüchen 1, 2 oder 3, **dadurch gekennzeichnet, daß** das zweite elastische Element (14) jeweils mit seiner einen äußeren Stirnfläche (20a) an der Lagerscheibe (16) anvulkanisiert ist und mit seiner anderen inneren Stirnfläche (20) das elastische Element (14) mit einer Ringscheibe (24) verbunden ist, die sich an der Schrägfläche (12; 12a) des Lagerhülsenteus (11a) abstützt.

5. Zentrallager nach den Ansprüchen 1, 2 oder 3, **dadurch gekennzeichnet, daß** das zweite elastische Element (14) mit seiner einen inneren Stirnfläche (21) jeweils an der Schrägfläche (12) des Lagerhülsenteils (11a) anvulkanisiert ist und die andere äußere Stirnfläche (20) mit einer Scheibe (22) verbunden ist, die sich an der Lagerscheibe (16a) abstützt, welche in diesem Bereich eine Aufnahme (23) bildet.

## Claims

1. A central bearing for a rear axle of a motor vehicle, connected to an axle tube of the rear axle, **characterized in that** a first resilient member (10) is arranged on a bearing axle support (7) and is held clamped in a surrounding bearing sleeve (11) on which a respective second resilient member (14) comprising a sleeve member and held on the bearing axle support (7) by way of bearing discs (16; 16a) at the end is supported on both sides of a median plane (**X-X**) in each case.

2. A central bearing according to Claim 1, **characterized in that** the first resilient member (10) is arranged between oblique faces (8, 9) of the bearing axle support (7) and the surrounding bearing sleeve (11), and the second resilient members (14), which are spaced from the bearing axle support (7) and are connected to the bearing disc (16) in a cantilevered manner, are supported on oblique faces (12; 12a).

3. A central bearing according to Claim 1 or 2, **characterized in that** the bearing disc (16) is connected to the bearing axle support (7) by way of a press fit.

4. A central bearing according to Claim 1, 2 or 3, **characterized in that** the second resilient member (14) is vulcanized with one respective outer end face (20a) thereof onto the bearing disc (16) in each case and the resilient member (14) is connected by the other respective inner end face (20) thereof to an annular disc (24) which is supported on the oblique face (12; 12a) of the bearing-sleeve part (11a).

5. A central bearing according to Claim 1, 2 or 3, **characterized in that** the second resilient member (14) is vulcanized with one respective inner end face (21) thereof onto the oblique face (12) of the bearing-sleeve part (11a) and the other outer end face (20) is connected to a disc (22) supported on the bearing disc (16a) which forms a receiving means (23) in this region.

## Revendications

1. Palier central pour un essieu arrière d'un véhicule automobile, qui est relié à un tube de l'essieu arrière, **caractérisé en ce qu'**un premier élément élastique (10) est disposé sur un support (7) de l'axe de palier et est maintenu serré dans un manchon de palier (11) l'entourant, sur lequel prend appui, des deux côtés d'un plan médian (X-X), un deuxième élément élastique (14) qui est constitué d'un élément en douille et qui est maintenu sur le support (7) de l'axe de palier par des douilles de palier (16 ; 16a) frontales.

2. Palier central selon la revendication 1, **caractérisé en ce que** le premier élément élastique (10) est disposé entre des surfaces obliques (8, 9) du support (7) de l'axe de palier et le manchon de palier (11) l'entourant, et les deuxièmes éléments élastiques (14), qui sont espacés du support (7) de l'axe de palier et qui sont reliés librement à la douille de palier (16), sont soutenus contre des surfaces obliques (12 ; 12a).

3. Palier central selon les revendications 1 ou 2, **caractérisé en ce que** la douille de palier (16) est reliée au support (7) de l'axe de palier par un ajustement pressé.

4. Palier central selon les revendications 1, 2 ou 3, **caractérisé en ce que** le deuxième élément élastique (14) est vulcanisé par l'une de ses surfaces frontales extérieures (20a) sur la douille de palier (16) et, par son autre surface frontale intérieure (20), l'élément élastique (14) est relié à une bague annulaire (24) qui prend appui contre la surface oblique (12, 12a) de la partie (11a) du manchon de palier.

5. Palier central selon les revendications 1, 2 ou 3, **caractérisé en ce que** le deuxième élément élastique (14) est vulcanisé par l'une de ses surfaces frontales intérieure (21), sur la surface oblique (12) de la partie (11a) du manchon de palier, et l'autre surface frontale extérieure (20) est reliée à une bague (22) qui prend appui contre la douille de palier (16a), laquelle forme un logement (23) dans cette zone.
